(19) **Europäisches Patentamt / European Patent Office / Office européen des brevets**

(11) **EP 4 586 533 A1**

(12) **EUROPEAN PATENT APPLICATION**
published in accordance with Art. 153(4) EPC

(43) Date of publication:
**16.07.2025 Bulletin 2025/29**

(21) Application number: **23863469.5**

(22) Date of filing: **05.09.2023**

(51) International Patent Classification (IPC):
*H04L 5/00* (2006.01)  *H04W 72/231* (2023.01)
*H04W 72/232* (2023.01)  *H04L 27/00* (2006.01)
*H04L 5/02* (2006.01)  *H04L 25/02* (2006.01)
*H04L 12/02* (2006.01)  *H04W 72/04* (2023.01)
*H04W 72/23* (2023.01)

(52) Cooperative Patent Classification (CPC):
**H04L 5/00; H04L 5/02; H04L 12/02; H04L 25/02; H04L 27/00; H04W 72/04; H04W 72/23; H04W 72/231; H04W 72/232**

(86) International application number:
**PCT/KR2023/013258**

(87) International publication number:
**WO 2024/053997 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 07.09.2022  KR 20220113615
17.11.2022  KR 20220154881
16.02.2023  KR 20230021065

(71) Applicant: **LG Electronics Inc.**
**Yeongdeungpo-gu**
**Seoul 07336 (KR)**

(72) Inventors:
• **CHOI, Seunghwan**
  **Seoul 06772 (KR)**
• **YANG, Suckchel**
  **Seoul 06772 (KR)**
• **KIM, Seonwook**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR TRANSMITTING AND RECEIVING SIGNALS IN WIRELESS COMMUNICATION SYSTEM**

(57) A method and a device for transmitting/receiving signals in a wireless communication system, disclosed in the present specification, allow uplink switching to be performed between three or more bands. For each of all combinations of bands that can be configured, a specific uplink band to which a switching gap is to be applied may be set.

[FIG. 4]

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### Technical Problem

The object of the present disclosure is to provide a signal transmission and reception method for efficiently transmitting and receiving signals in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

The present disclosure provides a method and apparatus for transmitting and receiving a signal in a wireless communication system.

According to an aspect of the present disclosure, a method of transmitting and receiving a signal by a user equipment (UE) in a wireless communication system includes configuring at least three uplink (UL) bands, configuring one or more specific UL bands in which a switching gap is to be applied for each band combination, for all band combinations configurable by the at least three UL bands, and based on bands related to UL switching corresponding to a specific band combination from among the band combinations, applying the switching gap in the one or more specific UL bands for the specific band combination and performing UL transmission, wherein, during the switching gap, the UL transmission is omitted.

According to another aspect of the present disclosure, a method of transmitting and receiving a signal by a base station (BS) in a wireless communication system includes configuring at least three uplink (UL) bands in a user equipment (UE), configuring one or more specific UL bands in which a switching gap is to be applied for each band combination, for all band combinations configurable by the at least three UL bands, in the UE, and based on bands related to UL switching corresponding to a specific band combination from among the band combinations, receiving, from the UE, UL transmission, to which the switching gap is applied, in the one or more specific UL bands for the specific band combination, wherein, during the switching gap, the UL transmission is omitted.

In another aspect of the present disclosure, there are provided an apparatus, a processor, and a storage medium for performing the signal transmission and reception method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

### ADVANTAGEOUS EFFECTS

According to one embodiment of the present disclosure, when control and data signals are transmitted and received between communication devices, the signals may be transmitted and received more efficiently based on operations different from those in the prior art

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.
FIGS. 4 to 5 are diagrams illustrating methods for transmitting and receiving a signal according to the embodiments of the present disclosure.
FIGS. 6 to 9 illustrate devices according to an embodiment of the present disclosure.

## MODE FOR INVENTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

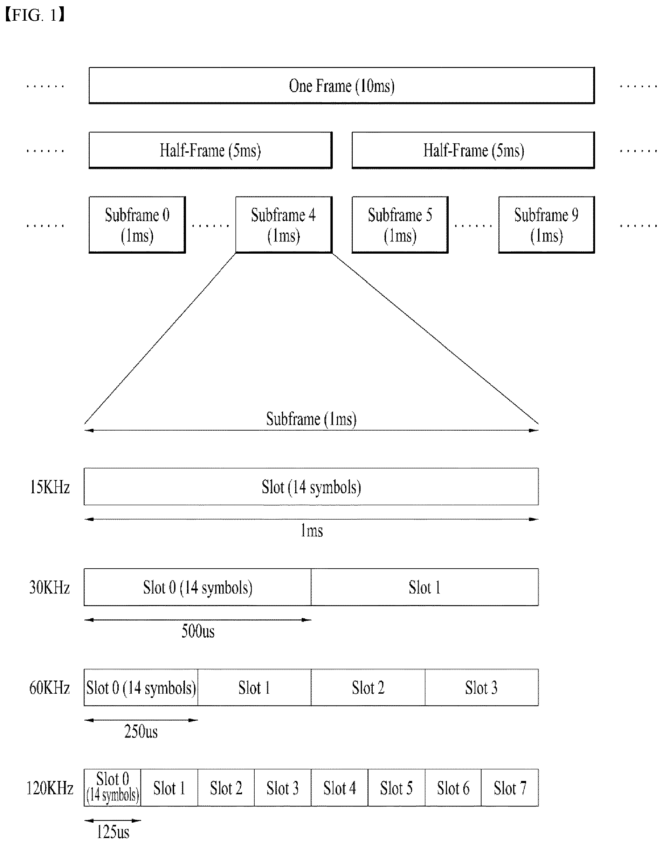

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS (15*2^u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: number of symbols in a slot<br>* $N^{frame,u}_{slot}$: number of slots in a frame<br>* $N^{subframe,u}_{slot}$: number of slots in a subframe | | | |

Table 2 illustrates that the number of symbols per slot, the number of slots per frame, and the number of slots per subframe vary according to SCSs in an extended CP case.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

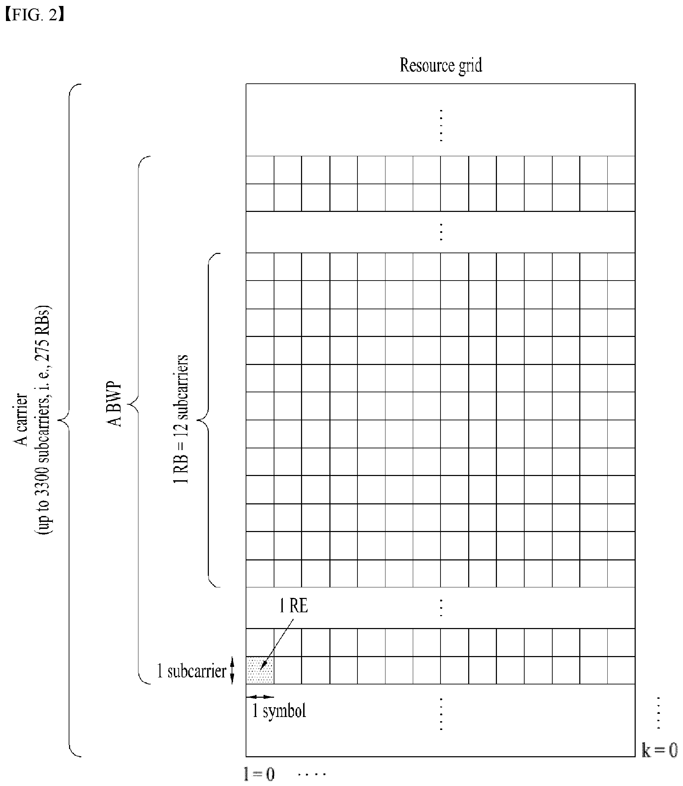

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace $m \in \{0, 1, ..., M-1\}$ may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

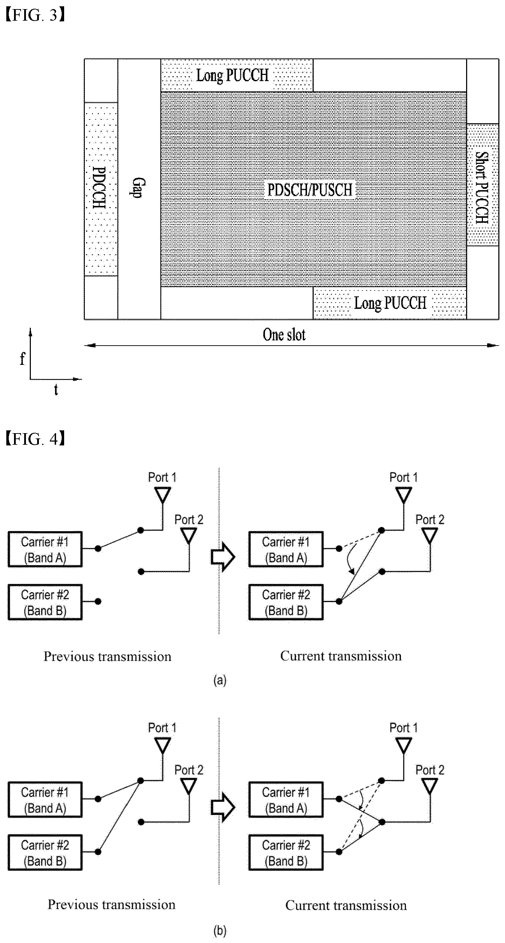

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

UL Physical Channels/Signals

(1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

(2) PUCCH

A PUCCH may carry UCI. The UCI includes the following information.

- Scheduling request (SR): The SR is information used to request a UL-SCH resource.
- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.
- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

Table 7 shows PUCCH formats. The PUCCH formats may be classified according to UCI payload sizes/transmission lengths (e.g., the number of symbols included in a PUCCH resource) and/or transmission structures. The PUCCH formats may be classified into short PUCCH formats (PUCCH formats 0 and 2) and long PUCCH formats (PUCCH formats 1, 3, and 4) according to the transmission lengths.

[Table 4]

| PUCCH format | Length in OFDM $N_{\text{symb}}^{\text{PUCCH}}$ symbols | Number of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

(0) PUCCH Format 0 (PF0)

- Supportable UCI payload size: up to K bits (e.g., K = 2)
- Number of OFDM symbols included in one PUCCH: 1 to X symbols (e.g., X = 2)
- Transmission structure: only a UCI signal is configured with no DM-RS, and a UCI state is transmitted by selecting and transmitting one of a plurality of sequences.

(1) PUCCH Format 1 (PF1)

- Supportable UCI payload size: up to K bits (e.g., K = 2)
- Number of OFDM symbols included in one PUCCH: Y to Z symbols (e.g., Y = 4 and Z = 14)
- Transmission structure: UCI and a DM-RS are configured in different OFDM symbols based on time division multiplexing (TDM). For the UCI, a specific sequence is multiplied by a modulation symbol (e.g., QPSK symbol). A cyclic shift/orthogonal cover code (CS/OCC) is applied to both the UCI and DM-RS to support code division multiplexing (CDM) between multiple PUCCH resources (complying with PUCCH format 1) (in the same RB).

(2) PUCCH Format 2 (PF2)

- Supportable UCI payload size: more than K bits (e.g., K = 2)
- Number of OFDM symbols included in one PUCCH: 1 to X symbols(e.g., X = 2)
- Transmission structure: UCI and a DMRS (DM-RS) are configured/mapped in/to the same symbol based on frequency division multiplexing (FDM), and encoded UCI bits are transmitted by applying only an inverse fast Fourier transform (IFFT) thereto with no DFT.

(3) PUCCH Format 3 (PF3)

- Supportable UCI payload size: more than K bits (e.g., K = 2)
- Number of OFDM symbols included in one PUCCH: Y to Z symbols (e.g., Y = 4 and Z = 14)
- Transmission structure: UCI and a DMRS are configured/mapped in/to different symbols based on TDM. Encoded UCI bits are transmitted by applying a DFT thereto. To support multiplexing between multiple UEs, an OCC is applied to the UCI, and a CS (or interleaved frequency division multiplexing (IFDM) mapping) is applied to the DM-RS before the DFT.

(4) PUCCH Format 4 (PF4 or F4)

- Supportable UCI payload size: more than K bits (e.g., K = 2)
- Number of OFDM symbols included in one PUCCH: Y to Z symbols (e.g., Y = 4 and Z = 14)
- Transmission structure: UCI and a DMRS are configured/mapped in/to different symbols based on TDM. The DFT is applied to encoded UCI bits with no multiplexing between UEs.

FIG. 4 illustrates an ACK/NACK transmission process. Referring to FIG. 4, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 or DCI format 1_1 may include the following information.

- Frequency domain resource assignment: Indicates an RB set assigned to a PDSCH.
- Time domain resource assignment: Indicates K0 and the starting position (e.g., OFDM symbol index) and length (e.g., the number of OFDM symbols) of the PDSCH in a slot.
- PDSCH-to-HARQ_feedback timing indicator: Indicates K1.

After receiving a PDSCH in slot #(n+K0) according to the scheduling information of slot #n, the UE may transmit UCI on a PUCCH in slot #(n+K1). The UCI includes an HARQ-ACK response to the PDSCH. In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

## Uplink switching with 3 or 4 uplink bands

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

Generally, due to a size of a UE, the number of antennas to be installed on the corresponding UE is limited. A UE with N transmission chains via N antennas may support up to N 1-port UL transmissions simultaneously or up to N-port UL transmissions. A method is required to support a UE with a limited transmission chain to perform UL transmission effectively. Hereinafter, implementations of this specification for UL transmission (Tx) switching are described. Most UEs developed to date support up to two Tx chains, and thus the implementations of this specification are described below assuming that the UE supports UL transmission through up to two Tx chains, i.e., up to two ports. However, implementations of this specification are not limited to 1-port or 2-port UL transmission, but may also be applied to N-port UL transmission, where N may be greater than 2.

FIG. 4 is a diagram illustrating a concept of UL transmission switching.

To increase the throughput and efficiency of UL transmission, NR Rel-16 provides UL Tx switching (UTS), which switches Tx chain(s) connected to UL carrier(s) under a certain condition, for the purpose of enabling a UE to effectively perform 1-port UL transmission or 2-port UL transmission by using up to two Tx chains. FIG. 4(a) illustrates 1Tx-2Tx switching between two carriers/bands, and FIG. 4(b) illustrates 2Tx-2Tx switching between two carriers/bands.

For example, if UL transmission (hereinafter, "previous transmission") is performed on carrier #1 with 1 Tx chain, and then UL transmission (hereinafter, "current transmission") is configured/instructed to be performed on another carrier #2 with 2 Tx chains, the UE may switch the Tx chain connected to carrier #1 to carrier #2 to enable 2-port UL transmission on carrier #2. These UTS configuration and switching method may be applied to band combinations corresponding to evolved-universal terrestrial radio access new-radio-dual connectivity (EN-DC) without supplementary UL (SUL), standalone SUL, and inter-band CA. In NR Rel-17, an additional condition is introduced to extend the 1Tx-2Tx switching (i.e., switching between 1 Tx chain and 2 Tx chain) of existing NR Rel-16 to 2Tx-2Tx switching (i.e., switching between 2 Tx chain and 2 Tx chain), and at the same time, UTS between two carriers introduced in NR Rel-16 is extended to allow UTS between two different bands (e.g., 1 carrier in one band and 2 contiguous carriers in another band).

When a certain condition is satisfied and the UE is configured with uplinkTxSwitching via RRC signaling, the UE may omit UL transmission during uplink switching gap NTx1-Tx2. For example, when certain conditions are satisfied and the UE is configured with uplinkTxSwitching via RRC signaling, the UE omits all UL transmission(s), including UL transmission scheduled via DCI and UL transmissions configured by higher layer signaling (e.g., configured grant-based PUSCH), during a UL switching gap $N_{Tx1-Tx2}$. The switching gap NTx1-Tx2 may be indicated by uplinkTxSwitchingPeriod2T2T provided from the UE to the BS via UE capability report when uplinkTxSwitching-2T-Mode is configured via RRC signaling, otherwise the switching gap NTx1-Tx2 may be indicated by uplinkTxSwitchingPeriod provided from the UE to the BS via UE capability report. Here, the RRC configuration uplinkTxSwitching may be provided to the UE as included in a configuration regarding a serving cell, and may include uplinkTxSwitchingPeriodLocation indicating whether a location of a UL Tx switching period is configured on the UL carrier in case of inter-band UL CA, SUL or (NG)EN-DC, and uplinkTxSwitchingCarrier indicating that the configured carrier is carrier 1 or carrier 2 for dynamic UL Tx switching. The RRC parameter uplinkTxSwitching-2T-Mode indicates that a 2Tx-2Tx switching mode is configured for inter-band UL CA or SUL, in which case a switching gap duration for triggered UL switching may be equal to a switching time capability value reported for the switching mode. When the RRC parameter uplinkTxSwitching-2T-Mode is not provided and uplinkTxSwitching is configured, it may be interpreted that 1Tx-2Tx UTS is configured, in which case there may be one UL (or one UL band in case of intra-band) configured with uplinkTxSwitching.

When the UE indicates the capability for UL switching for a band combination and configures the band combination to MCG using E-UTRA radio access and SCG using NR radio access, to UL CA, or to a serving cell with two UL carriers with higher layer (e.g. RRC) parameter supplementaryUplink, the switching gap may be present under certain conditions. For example, the following tables are taken from 3GPP TS 38.214 V17.1.0 and illustrate UTS conditions.

When UL switching is triggered for UL transmission starting at $T_0$, which is after $T_0 - T_{offset}$, the UE is not expected to cancel the UL switching, or to trigger any other new UL switching that occurs before $T_0$ for any other UL transmission scheduled after $T_0 - T_{offset}$, where $T_{offset}$ may be a UE processing procedure time defined for UL transmission triggering switching (e.g. see S5.3, S5.4, S6.2.1 and S6.4 of 3GPP TS 38.214 and S9 of 3GPP TS 38.213). The UE is not expected to perform more than one UL switching in a slot with $u_{UL} = max(u_{UL,1}, u_{UL,2})$, where $u_{UL,1}$ corresponds to a subcarrier spacing of an active UL BWP of one UL carrier before the switching gap and $u_{UL,2}$ corresponds to the subcarrier spacing of the active UL BWP of another UL carrier after the switching gap.

[Table 5]

#### 6.1.6.1 Uplink switching for EN-DC

For a UE indicating a capability for uplink switching with *BandCombination-UplinkTxSwitch* for a band combination, and if it is for that band combination configured with a MCG using E-UTRA radio access and with a SCG using NR radio access (EN-DC), if the UE is configured with uplink switching with parameter *uplinkTxSwitching*,

- for the UE configured with *switchedUL* by the parameter *uplinkTxSwitchingOption*, when the UE is to transmit in the uplink based on DCI(s) received before $T_0 - T_{offset}$ or based on a higher layer configuration(s):

  - when the UE is to transmit an NR uplink that takes place after an E-UTRA uplink on another uplink carrier then the UE is not expected to transmit for the duration of $N_{Tx1-Tx2}$ on any of the two carriers.

  - when the UE is to transmit an E-UTRA uplink that takes place after an NR uplink on another uplink carrier then the UE is not expected to transmit for the duration of $N_{Tx1-Tx2}$ on any of the two carriers.

  - the UE is not expected to transmit simultaneously on the NR uplink and the E-UTRA uplink. If the UE is scheduled or configured to transmit any NR uplink transmission overlapping with an E-UTRA uplink transmission, the NR uplink transmission is dropped,

- for the UE configured with *uplinkTxSwitchingOption* set to 'dualUL', when the UE is to transmit in the uplink based on DCI(s) received before $T_0 - T_{offset}$ or based on a higher layer configuration(s):

  - when the UE is to transmit an NR two-port uplink that takes place after an E-UTRA uplink on another uplink carrier then the UE is not expected to transmit for the duration of $N_{Tx1-Tx2}$ on any of the two carriers.

  - when the UE is to transmit an E-UTRA uplink that takes place after an NR two-port uplink on another uplink carrier then the UE is not expected to transmit for the duration of $N_{Tx1-Tx2}$ on any of the two carriers.

  - the UE is not expected to transmit simultaneously a two-port transmission on the NR uplink and the E-UTRA uplink.

- in all other cases the UE is expected to transmit normally all uplink transmissions without interruptions.

- when the UE is configured with *tdm-PatternConfig* or by *tdm-PatternConfig2*

  - for the E-UTRA subframes designated as uplink by the configuration, the UE assumes the operation state in which one-port E-UTRA uplink can be transmitted.

  - for the E-UTRA subframes other than the ones designated as uplink by the configuration, the UE assumes the operation state in which two-port NR uplink can be transmitted.

[Table 6]

## 6.1.6.2    Uplink switching for carrier aggregation

For a UE indicating a capability for uplink switching with *BandCombination-UplinkTxSwitch* or *uplinkTxSwitchingPeriod2T2T* for a band combination, and if it is for that band combination configured with uplink carrier aggregation:

- If the UE is configured with uplink switching with parameter *uplinkTxSwitching*, when the UE is to transmit in the uplink based on DCI(s) received before $T_0 - T_{offset}$ or based on a higher layer configuration(s):

  - When the UE is to transmit a 2-port transmission on one uplink carrier on one band and if the preceding uplink transmission is a 1-port transmission on another uplink carrier on another band, then the UE is not expected to transmit for the duration of $N_{Tx1-Tx2}$ on any of the carriers.

  - When the UE is to transmit a 1-port transmission on one uplink carrier on one band and if the preceding uplink transmission is a 2-port transmission on another uplink carrier on another band, then the UE is not expected to transmit for the duration of $N_{Tx1-Tx2}$ on any of the carriers.

  - For the UE configured with *uplinkTxSwitchingOption* set to 'switchedUL', when the UE is to transmit a 1-port transmission on one uplink carrier on one band and if the preceding uplink transmission was a 1-port transmission on another uplink carrier on another band, then the UE is not expected to transmit for the duration of $N_{Tx1-Tx2}$ on any of the carriers.

  - For the UE configured with *uplinkTxSwitchingOption* set to 'dualUL', when the UE is to transmit a 2-port transmission on one uplink carrier on one band and if the preceding uplink transmission was a 1-port transmission on a carrier on the same band and the UE is under the operation state in which 2-port transmission cannot be supported in the same band, then the UE is not expected to transmit for the duration of $N_{Tx1-Tx2}$ on any of the carriers.

  - For the UE configured with *uplinkTxSwitchingOption* set to 'dualUL', when the UE is to transmit a 1-port transmission on one uplink carrier on one band and if the preceding uplink transmission was a 1-port transmission on another uplink carrier on another band and the UE is under the operation state in which 2-port transmission can be supported on the same uplink carrier, then the UE is not expected to transmit for the duration of $N_{Tx1-Tx2}$ on any of the carriers.

  - For the UE configured with *uplinkTxSwitchingOption* set to 'dualUL', if the UE is configured with *OneT* with *uplinkTxSwitching-DualUL-TxState*, when the UE is under the operation state in which 2-port transmission can be supported on one carrier on one band followed by no transmission on any carrier on the same band and 1-port transmission on the other carrier on another band the UE shall consider this as if 1-port transmission was transmitted on both uplinks, otherwise the UE shall consider this as if 2-port transmission took place on the transmitting carrier.

  - If *uplinkTxSwitching-2T-Mode* is configured, when the UE is to transmit a 2-port transmission on one uplink carrier on one band and if the preceding uplink transmission is a 2-port transmission on another uplink carrier on another band, then the UE is not expected to transmit for the duration of $N_{Tx1-Tx2}$ on any of the carriers.

  - The UE is not expected to be scheduled or configured with uplink transmissions that result in simultaneous transmission on two antenna ports on one uplink carrier on one band, and any transmission on another uplink carrier on another band.

- In all other cases the UE is expected to transmit normally all uplink transmissions without interruptions.

## 6.1.6.3    Uplink switching for supplementary uplink

For a UE indicating a capability for uplink switching with *BandCombination-UplinkTxSwitch* for a band combination, and if it is for that band combination configured in a serving cell with two uplink carriers with higher layer parameter *supplementaryUplink*:

- If the UE is configured with uplink switching with parameter *uplinkTxSwitching*:

  - If the UE is to transmit any uplink channel or signal on a different uplink on a different band from the preceding transmission occasion based on DCI(s) received before $T_0 - T_{offset}$ or based on a higher layer configuration(s), then the UE assumes that an uplink switching is triggered in a duration of switching gap $N_{Tx1-Tx2}$, where $T_0$ is the start time of the first symbol of the transmission occasion of the uplink channel or signal and $T_{offset}$ is the preparation procedure time of the transmission occasion of the uplink channel or signal given in clause 5.3, clause 5.4, clause 6.2.1, clause 6.4 and in clause 9 of [6, TS 38.213], respectively. During the switching gap $N_{Tx1-Tx2}$, the UE is not expected to transmit on any of the two uplinks.

  - In all other cases the UE is expected to transmit normally all uplink transmissions without interruptions.

[Table 7]

NR supports a wide spectrum across various frequency ranges. The availability of a spectrum is expected to increase in a 5G advanced market due to repurposing of bands originally used in previous generation cellular networks. Especially for a low-frequency FR1 band, an available spectral block tends to be more fragmented and distributed over narrower bandwidths. For an FR2 band and some FR1 bands, a multicarrier operation within a band is required as an available spectrum is to be widened. To satisfy diverse spectrum requirements, it is important to provide higher throughput and adequate coverage in a network by using these distributed spectrum band or wider bandwidth spectrum in a more spectrum/power efficient and flexible manner. For a multicarrier UL operation, the current specification has several limitations. For example, a 2TX UE may be configured with up to two UL bands to be changed only by RRC reconfiguration, and UL Tx switching may only be performed between the two UL bands for the 2Tx UE. Instead of RRC-based cell(s) reconfiguration, dynamically selecting carriers with UL Tx switching based on, for example, data traffic, TDD DL/UL configuration, bandwidth and channel conditions of each band may potentially lead to a higher UL data rate, spectrum utilization, and UE capacity.

For a higher UL data rate, spectrum utilization, and UE capacity, UTS between more than two bands is currently considered. Hereinafter, UTS trigger condition(s), UTS-related configuration method(s), and/or UTS operation method(s) required to support UTS between multiple bands (e.g., three or more bands) according to some implementations of this specification are described.

Hereinafter, a cell may be interpreted according to context. For example, the cell may mean a serving cell. The cell may include one DL component carrier (CC) and 0 to 2 UL CCs, but implementations of this specification described below are not limited thereto. In the following, unless otherwise specified, the terms cell and CC may be used interchangeably. In some implementations of this specification, the cell/CC may be replaced with an (active) BWP within the serving cell. Unless otherwise specified, in the implementations of this specification described below, the cell/CC may be used as a concept encompassing PCell, SCell, PsCell, and the like, which may be configured/expressed in a carrier aggregation (CA)/dual connectivity (DC) scenario.

Hereinafter, the term "band" means a frequency band, and the term "band" may be used interchangeably with the terms "carrier" and/or "cell" within the band. In this case, each band may include one carrier or multiple (e.g., two) contiguous (or non-contiguous) carriers. The proposed methods described below may be applied to inter-band UL CA, intra-band UL CA, NR-DC, EN-DC, (standalone) SUL scenarios and related band combinations (unless otherwise specified).

For convenience of explanation in the implementations of this specification described below, the following notation is used.

- When UTS occurs, it may be expressed as a UTS trigger.
- Band (or carrier) related to UTS: This may refer to a band/carrier before and after UTS occurs.
- A Tx chain transition time caused by UTS is denoted as a UTS gap (or UTS period). During the UTS gap, no UL transmission occurs in the band/carrier related to the UTS. The UTS gap (switching gap) and the UTS period (switching period) may be specifically distinguished as follows.

    ■ Switching period: Switching time reported by UE. Basically, this is a band pair unit including two bands, and is reported as one of values of {35 us, 140 us, and 210 us}. For a specific switching case, a single value may be reported as a band combination unit including three or more bands. In this specification, it may also be expressed as a UTS period/time or a switching period.
    ■ Switching gap: Time duration during which UL transmission in all (or some) bands related to a single UL Tx switching event due to this. The switching gap may be determined as a switching period (reported by a UE) for the corresponding Tx switching or determined by using the switching period of each band pair related to the corresponding Tx switching.

For example, for A(1T)+B(1T)->C(2T) switching, in which transmission occurs using 2 Tx chains on a band C while 1 Tx chain is connected to a band A and 1 Tx chain is connected to a band B, if a band combination {A+B, C} is reported by the UE, the switching gap is determined as a reported value. If not reported, the switching gap may be determined as a value derived using the switching period AB (period_AB) for a band pair including the bands A and B and the switching period AC (period_AC) for a band pair including the bands A and C. In this specification, it may also be expressed as a UTS gap/interval or a switching interval.

- A 1 Tx chain may be expressed as 1T, and a 2Tx chain may be expressed as 2T.
- 1-port UL transmission may be expressed as 1p, and 2-port UL transmission may be expressed as 2p.

- When 1 Tx chain or 2 Tx chains are connected to a certain band A (and/or carrier(s) belonging to the band A), these states may be expressed as A(1T) and A(2T), respectively.
- When 1 Tx chain is connected to each of two specific bands A (and/or carrier(s) belonging to band A) and band B (and/or carrier(s) belonging to band A), this state may be expressed as A(1T)+B(1T).

UL transmission may mean any UL channel or UL signal supported by NR, and the like.

- "Previous transmission" may mean the most recent UL transmission performed by the UE prior to UTS triggering, and "current transmission" may mean UL transmission performed by the UE immediately (or simultaneously) with UTS triggering. The term "transmission" hereinafter may mean "UL transmission".
- The expression that UL transmission occurs may mean UL transmission scheduled via DCI for a UL grant and/or UL transmission configured via higher layer signaling (e.g., RRC signaling) (e.g., configured grant UL transmission).
- When 1-port UL transmission occurs in a specific band A (and/or carrier(s) belonging to band A), it may be expressed as A(1p), and when 2-port UL transmission occurs, it may be expressed as A(2p).
- When 1-port UL transmission occurs in two specific bands, e.g., band A and band B, (and/or carrier(s) belonging to the corresponding band), it may be expressed as A(1p)+B(1p).

Some implementations of this specification described below are described in terms of UTS generation between two bands in a situation in which four bands/carriers are configured (or activated). However, the same method(s) as the implementations of this specification described below may also be applied to UTS that occurs in a situation in which a smaller number of bands (e.g., 3) are configured/activated. The same method(s) as the implementations of this specification described below may also be applied to UTS that occurs in a situation in which a larger number of bands (e.g., 5) are configured/activated.

Some implementations of this specification described below are described without distinguishing between 1Tx-2Tx switching or 2Tx-2Tx switching. However, some implementations may be specifically applicable to 1Tx-2Tx switching and/or 2Tx-2Tx switching.

In some implementations of this specification described below, the "simultaneous transmission" in multiple bands may mean that a start time (e.g., start symbol) of UL transmissions in each of the corresponding multiple bands coincide and/or some (or all) of the UL transmission resources/periods in each of the multiple bands overlap in time.

The "band pair" or "band combination" stated in this specification may mean any (specific) band combination, a combination (pair) of two bands belonging to any (specific) band combination, or a combination (pair) of two bands unrelated to any (specific) band combination (i.e., the two bands may belong to different band combinations) unless otherwise specified.

In existing UL Tx switching, a band in which a UTS gap is applied is semi-statically configured through an RRC parameter 'uplinkTxSwitchingPeriodLocation'. Table 8 shows uplinkTxSwitchingPeriodLocation as described in 3GPP TS 38.331.

[Table 8]

| - uplinkTxSwitchingPeriodLocation: Indicates whether the location of UL Tx switching period is configured in this uplink carrier in case of inter-band UL CA, SUL, or (NG)EN-DC. In case of inter-band UL CA or SUL, network configures this field to TRUE for one of the uplink carriers involved in dynamic UL TX switching and configures this field in the other carrier to FALSE. |
|---|

When Tx switching is allowed in three or more bands as in the existing UL Tx switching, if a band in which a UTS gap is to be applied is indicated by using the RRC parameter, ambiguity may occur. A separate method may be needed for this case. When UL Tx switching for three or more bands is established through one (or a combination of two or more) of the proposed methods below, the band (or cell) to which the UTS gap is to be applied may be configured/instructed/determined.

In the proposal described below, the expression 'band in which a UTS gap is to be applied' may mean that a UTS gap is applied to one (or more) of uplink (UL) carriers included in a corresponding band. For example, the meaning that a UTS gap is applied/configured to a band including two UL carriers (e.g., carrier#1 or carrier#2) may be interpreted to mean that a UTS gap is applied/configured to carrier#1 and/or carrier#2 of the corresponding band.

**[1] Method of configuring band in which UTS gap is to be applied for each band pair (or band combination) via RRC**

[1-1] For each band pair in which UTS occurs (or which is related to UTS), a band in which the UTS gap is to be applied is configured (previously) via RRC (e.g., table). When UTS occurs, a UE may apply a gap in a band configured in the corresponding band pair. For example, if four bands of {A, B, C, D} are configured for UTS, a band in which a UTS gap of the corresponding Tx switching is to be applied when UTS occurs in a band pair including two bands each, as shown in Table 9 below, is pre-configured via RRC. When UTS occurs, for example, for a band pair {A,B}, a Tx chain of a band A (or B) switches to a band B (or A). When UTS occurs in a specific band pair, the band in which the UTS gap defined for the corresponding band pair is to be applied may be determined based on Table 9 below.

[Table 9]

| Band pair / Band combination | Band in which UTS gap is to be applied | Description |
|---|---|---|
| {A, B} | A | {X,Y} means that a Tx chain is switched from band X to band Y, or from band Y to band X. In this case, a band in which the UTS gap is to be applied is configured. |
| {A, C} | A | |
| {A, D} | A | |
| {B, C} | B | |
| {B, D} | B | |
| {C, D} | C | |

In this example, if RRC is configured as in Table 9 above, when UTS occurs between a band B and a band C, a UTS gap may be applied in the band B (regardless of whether a Tx chain switches from the band B to the band C or from the band C to the band B).

[1-2] Alternatively, (as another method of [1-1]), as shown in Table 10 below, the band in which the UTS gap of the corresponding Tx switching is to be applied when UTS occurs may be pre-configured via RRC, depending on a switch-from band and a switch-to band. When UTS occurs, for example, for a band pair {A,B}, a Tx chain of a band A (or B) switches to a band B (or A). When a Tx chain is switched between two bands, a band in which the Tx chain is connected/established before switching is expressed as a switch-from band, and the band in which the Tx chain is connected/established after switching is expressed as a switch-to band.

[Table 10]

| Band pair / Band combination | switch-from band | switch-to band | Band in which UTS gap is to be applied |
|---|---|---|---|
| {A, B} | A | B | A |
| {A, B} | B | A | B |
| {A, C} | A | C | A |
| {A, C} | C | A | C |
| {A, D} | A | D | A |
| {A, D} | D | A | D |
| {B, C} | B | C | B |
| {B, C} | C | B | C |
| {B, D} | B | D | B |
| {B, D} | D | B | D |
| {C, D} | C | D | C |
| {C, D} | D | C | D |

In this example, in a case in which RRC is configured as in Table 10 above, when UTS occurs between the band B and the band C, if a {switch-from band, switch-to band} combination is {B,C}, a UTS gap may be applied in the band B, and in the case of {C,B}, the UTS gap may be applied in the band C.

[1-3] (As another method of [1-1], and [1-2]) For each band pair of [1-1] or [1-2], whether a UTS gap is to be applied in each band (belonging to a band pair) is configured to TRUE or FALSE (via RRC, or the like), and then a band in which the UTS gap is to be applied may be determined based on TRUE/FALSE configured in the band pair in which UL Tx switching actually occurs. For example, for each band pair, whether a UTS gap is applied in a band belonging to the corresponding band pair is configured to TRUE/FALSE as shown in Table 11 below. When UL Tx switching occurs in the corresponding band pair, the band in which the UTS gap is to be applied may be configured/determined depending on the configured TRUE/FALSE.

[Table 11]

| Band pair / Band combination | Band in which UTS gap is to be applied |
|---|---|
| {A, B} | A=TRUE, B=FALSE |
| {A, C} | C=TRUE, A=FALSE |
| {A, D} | A=TRUE, D=FALSE |
| {B, C} | B=TRUE, C=FALSE |
| {B, D} | D=TRUE, B=FALSE |
| {C, D} | C=TRUE, D=FALSE |

The TRUE/FALSE configuration for each band pair (for each band belonging to the corresponding band pair) may differ depending on whether each band within the band pair is a switch-from band or a switch-to band as described in [1-2] above. For example, in Table 11 above, when the {switch-from band, switch-to band} combination for bands {A,B} is {A,B} and {B,A}, the TRUE/FALSE values for band A (and/or band B) may be configured separately.

[1-3A] For each band configured for a UE (or configured to be used for Tx switching) (in another method of [1-1] to [1-3]), whether a UTS gap is applied in each band is configured to TRUE or FALSE (via RRC, or the like). The band in which the UTS gap is applied may be determined based on the TRUE/FALSE configured in each band corresponding to the band pair in which the actual (corresponding) UL Tx switching occurs (i.e., switch-from band(s) or switch-to band(s)). For example, whether or not a UTS gap is applied in each band is configured to TRUE/FALSE as in the table below, and when UL Tx switching occurs in the corresponding band pair, the band in which the UTS gap is applied may be configured/determined according to the configured TRUE/FALSE.

[Table 12]

| Band | Band in which UTS gap is to be applied |
|---|---|
| A | TRUE (or FALSE) |
| B | TRUE (or FALSE) |
| C | TRUE (or FALSE) |
| D | TRUE (or FALSE) |

In other words, whether a UTS gap is applied in two or more bands in which UL Tx switching occurs is applied/determined for each band related to the corresponding to the UL Tx switching based on the RRC configuration as above.

When applying the above method, if TRUE/FALSE values configured in two or more bands related to UL Tx switching are the same, a UTS gap may be applied io a reference band (determined through the method proposed in [1-7] described below) (i.e., applying TRUE to the reference band). A UTS gap is not applied in other bands related to the corresponding UL Tx switching (i.e., FALSE is applied). Alternatively, when applying the above method, if TRUE/FALSE values configured in two or more bands related to UL Tx switching are the same, a UTS gap may not be applied in a reference band (determined through the method proposed in [1-7] described below) (i.e., applying FALSE to the reference band). The UTS gap is applied in one of other bands related to the corresponding UL Tx switching (i.e., TRUE is applied). In this case, one band in which the UTS gap is applied may be determined as a band with the lowest (or highest) cell index included in the corresponding band.

[1-4] When applying the [1-1] to [1-3][1-3A] method described above, UL Tx switching between three bands (e.g., "A(2T) -> B(1T)+C(1T)" or "A(1T)+B(1T) -> C(2T)") may occur. For example, if 2 Tx chains connected to the band A are switched to the band B and the band C, 1 Tx chain each, or if 1 Tx chain connected to the band A and 1 Tx chain connected to the band B are simultaneously switched to the band C. Alternatively, UL Tx switching between four bands (e.g., "A(1T) +C(1T) -> B(1T)+D(1T)") may occur. For example, if 1 Tx chain connected to the band A is switched to the band B and at the same time, 1 Tx chain connected to the band C is switched to the band D. In these cases, both TRUE and FALSE may be configured depending on whether or not a UTS gap is applied in a specific band. In this case, simply TRUE may be applied.

Alternatively, TURE or FALSE may be applied/configured according to a predefined rule. For example, if "A(2T) -> B(1T)+C(1T)" switching occurs in a state in which Table 11 or 12 in [1-3]/[1-3A] is configured via RRC, both TRUE and FALSE are configured in the band A, but a UE may apply a UTS gap in the band A (i.e., apply TRUE to the band A).

[1-5] In the UL Tx switching between 3 or 4 bands described in [1-4] above, if a UTS gap is configured (or configured to TRUE) for two or more bands from among bands related to actual Tx switching, a value (e.g., TRUE/FALSE) configured in a specific reference band (or cell) from among the bands related to the UL Tx switching may be applied. The reference band (or reference cell) may be configured/determined by the method described in [1-7]. For example, if "A(2T) -> B(1T)+C(1T)" switching occurs while Table 11 or Table 12 of [1-3]/[1-3A] is configured via RRC, the UTS gap is configured to be applied in both the band A and the band C. The UE may apply a value configured in a specific band from among the band A and the band C. For example, if the band A is a reference band, the band A may be determined as TRUE and the band C may be determined as FALSE. As another example, if the reference band is a switch-from (or switch-to) band, the TRUE or FALSE configured in the corresponding reference band may be applied equally to other switch-from (or switch-to) bands. If the reference band is configured to TRUE (or FALSE), the FALSE configuration may be applied in the switch-to (or switch-from) band.

As a specific example, if the reference band is a switch-from band and is configured to TRUE, a UTS gap may be applied/configured to one or more switch-from bands including the reference band. The FALSE configuration may be applied in the remaining one or more switch-to-bands and a UTS gap may not be applied/configured. In this case, if the number of switch-to bands is 2 (or more), and whether to apply the UTS gap configured in the reference band to the reference band for UTS between the reference band the corresponding each switch-to band is different (TRUE or FALSE), it may be stipulated to apply the TRUE configuration to the corresponding reference band (or conversely, apply the FALSE configuration).

As another example, if the reference band is a switch-to band and is configured to FALSE, a UTS gap may not be applied/configured to one or more switch-to bands including the reference band. The TRUE configuration may be applied in the remaining one or more switch-from-bands and a UTS gap may be applied/configured. If the number of switch-from bands is 2 (or more), and whether to apply the UTS gap configured in the reference band to the reference band for UTS between the reference band the corresponding each switch-from band is different (TRUE or FALSE), it may be stipulated to apply the TRUE configuration to the corresponding reference band (or conversely, apply the FALSE configuration).

[1-6] In UL Tx switching between the 3 or 4 bands described in [1-4] above, if there is no band with a UTS gap configured from among the bands related to actual UL Tx switching (or if all the related bands are configured to FALSE), a UTS gap may be applied in a specific reference band from among the bands related to the UL Tx switching. In this case, the reference band/cell may be configured/determined by the method described in [1-7].

[1-7] In [1-5] and [1-6] above, the reference band (or cell) may be configured as a band (or cell) having the lowest (or highest) index from among bands (or cells) configured in the UE or a band including a cell/carrier having the lowest (or highest) index. Alternatively, the reference band may be configured as a primary cell (P-cell)/primary secondary cell (PS-cell) or a band including the same. Alternatively, the reference band may be configured as a band (or cell) other than a band that includes the P-cell/PS-cell.

- Alternatively, the reference band (or cell) may be configured as a band (or cell) having the lowest (or highest) index from among the bands or cells for which UL Tx switching is configured (or configured to be used for UL Tx switching) or a band including a cell/carrier with the lowest (or highest) index. Alternatively, the reference band may be configured to a P-cell/PS-cell or a band including the same from among the bands in which UL Tx switching is configured. Alternatively, the reference band may be configured as a band (or cell) that is not a band that includes P-cell/PS-cell from among the bands in which UL Tx switching is configured.

- Alternatively, the reference band (or cell) may be configured as a band (or cell) having the lowest (or highest) index from among bands (or cells) related to one Tx switching or a band including a cell/carrier having the lowest (or highest) index. Alternatively, the reference band may be configured to a cell/PS-cell or a band including the same from among bands (or cells) related to one Tx switching. Alternatively, the reference band may be configured as a band (or cell) that is not a band that includes P-cell/PS-cell from among the band related to one Tx switching.

- Through separate RRC configuration, a specific one (or two) bands (or cells) (from among the bands (or cells) configured in the UE, or from among the bands (or cells) belonging to the configured band combination) may be configured as a reference band (or cell).

- Alternatively, through a separate RRC configuration, a priority (of the bands (or cells) configured in the UE or of the bands (or cells) belonging to the configured band combination) may be configured. For example, if the bands A/B/C/D are configured to A, B, C, D in order of high (or low) priority, the switching gap may be located in the band with the highest (or lowest) priority.

- If there are two or more switch-from bands, such as A(1T)+B(1T) -> C(1P) or A(1T)+B(1T) -> C(2P), or two or more switch-to bands, such as A(2T) -> B(1P)+C(1P), at least one of the following three methods may be applied. If certain band(s) are deactivated or in a dormant state and may not participate in UL transmission, the following method may be applied in the remaining band(s) excluding the corresponding band(s).

> ■ A switching gap may be applied only to a band with the highest (or lowest) priority.
> ■ If the band with the highest (or lowest) priority is a switch-from (or switch-to) band, a switching gap may be applied in all switch-from (or switch-to) bands related to the corresponding UL Tx switching.
> ■ Depending on a priority, a band location at which the switching gap is to be applied may be determined in order from the band with the highest (or lowest) priority.

Each of the methods proposed in the present disclosure may be applied in a plurality of bands including the reference band (or inter-band priority). For example, if a switching gap is configured to be located in one of the four bands through the methods [1-9] to [1-13] described below, when the band is a UL Tx switching band that is a switch-from (or switch-to) band, the switching gap may be located in all switch-from (or switch-to) bands related to the corresponding UL Tx switching.

The length of the switching gap (of a specific Tx switching) may be determined as (or based on) the switching period reported (or configured) for a band or band pair in which the switching gap is located.

- (Example 1) In switching of A(1T)+B(1T) -> C(1T)+D(1T), two times of switching, (a) or (b) below, are possible. When one of (a) and (b) is configured via RRC, or the like, one of gap locations configured in the band pairs corresponding to the case in which one of (a) and (b) is configured via RRC may be determined as a switching gap location of the corresponding UL Tx switching. In this case, a method of selecting one may be a method proposed in the present disclosure (e.g., a method of configuring a gap location of the corresponding switching to one band via RRC or a pre-defined rule).

    (a) 1 Tx in a band A is switched to a band C, and 1 Tx in a band B is switched to a band D.
    (b) 1 Tx in a band A is switched to a band D, and 1 Tx in a band B is switched to a band C.

- (Example 2) In switching of A(1T)+B(1T) -> C(1T)+D(1T), two times of switching, (a) or (b) above, are possible. If a switching gap length of the corresponding Tx switching is determined as a maximum value of switching periods configured in four band pairs (i.e., {A,C}, {B,D}, {A,D}, {B,C}) related to (the corresponding switching), the location of the switching gap (for the corresponding switching) may be determined according to a gap location configured in the band pair corresponding to the maximum switching period. For example, for switching in the above example, the switching gap is determined as the maximum value of switching periods reported/configured in the four band pairs. If the band pair in which the maximum period is reported/configured is {A,C}, the band in which the switching gap is located may follow the location of the switching gap configured in {A,C}. If the number of band pairs in which the maximum switching period is reported/configured is more than two, the location of the switching gap may be determined according to a pre-configured rule (e.g., lowest/highest frequency band). Alternatively, if the number of band pairs in which the maximum switching period is reported/configured is two or more, the location of the switching gap may be determined according to a priority between the bands (or band pairs) configured via RRC, or the like.

Alternatively, in a situation of (Example 1) or (Example 2) above, depending on a band in which the switching gap is located, it may be determined whether UL Tx switching is performed by using either method (a) or (b), and in this case, the length of the switching gap may also be determined.

In case of A(1T)+B(1T) -> C(1P), (if there is ambiguity as to whether the Tx to be switched to the band C is Tx in the band A or the Tx in the band B, or if any one of the two is possible depending on a UE implementation), a switching gap may be located in the band C (regardless of the gap location configured via RRC). If UL transmission is not possible due to the band A (or B) being disabled or idle, the switching gap may be determined according to the location of the switching gap configured in the band pair {B,C} (or band pair {A,C}).

Even in this case, depending on a band in which the switching gap (configured via RRC, or the like) is located, it may be determined whether UL Tx switching is A->C or B->C, and the length of the switching gap may also be determined.

In case of A(1T)+B(1T) -> C(1P), if there is ambiguity as to whether one Tx is to be switched from A->C or two Tx is to be switched from A->B and B->C, respectively, or if any one of the two is possible depending on a UE implementation, switching may be performed in a band pair with the largest (or smallest) switching period from among the band pairs {A,B}, {B,C}, and {A,C}. Even in this case, depending on a band in which the switching gap (configured via RRC, or the like) is located, a method in which the corresponding UL Tx switching operates may be determined in one of the two directions, and in this case, the length of the switching gap may also be determined.

[1-8] The UTS gap configuration (or TRUE/FALSE configuration) of each band described in [1-1] to [1-3]/[1-3A] above may be configured via a separate RRC parameter. Alternatively, an RRC parameter defined in Rel-17 (e.g.,

uplinkTxSwitchingPeriodLocation) may be used. In this case, (for configuration using uplinkTxSwitchingPeriodLocation and/or configuration using separate RRC), TRUE may be configured in a band in which the UTS gap is to be applied, and FALSE may be configured in other bands (configured in a pair relationship with the corresponding band). Alternatively, TRUE may be configured in a band in which the UTS gap is to be applied, and FALSE may not be configured separately in other bands (configured in a pair relationship with the corresponding band).

[1-9] The RRC configuration methods of [1-1] to [1-8] described above may be configured in units of combinations of two band pairs. For example, in addition to configuring a UTS gap between two bands according to the RRC configuration method of [1-1] to [1-3]/[1-3A] described above, a UTS gap between two band pairs according to the RRC configuration method as shown in Table 13 below may be configured. That is, for each of the three combinations between the two band pairs (i.e., [{A,B},{C,D}], [{A,C},{B,D}], or [{A,D},{B,C}]), the "UTS gap application band configuration" or "TRUE/FALSE for UTS gap application for each band" described above is configured. The corresponding configuration may be applied when Tx switching between two band pairs. This method may be specifically applied to (but is not limited to) Tx switching between four bands. For example, the UTS gap application band for each band may be configured/applied in a combination unit of two band pairs as shown below.

[Table 13]

| Band pair combination | Band in which UTS gap is to be applied |
|---|---|
| [{A, B}, {C,D}] | A=TRUE, B=FALSE, C=FALSE, D=FALSE |
| [{A, C}, {B,D}] | A=TRUE, B=FALSE, C=FALSE, D=FALSE |
| [{A, D}, {B,C}] | A=TRUE, B=FALSE, C=FALSE, D=FALSE |

In Table 13 above, [{X,Y},{Z,W}] means that two Tx chains are each switched from a band pair {X,Y} to {Z,W}, or two Tx chains are each switched from a band pair {Z,W} to {X,Y}.

Alternatively, the UTS gap application band for each band may be configured/applied in a combination unit of two band pairs as shown below.

[Table 14]

| Band pair combination | Band in which UTS gap is to be applied |
|---|---|
| [{A, B}, {C,D}] | {A,B}=TRUE, {C,D}=FALSE |
| [{A, C}, {B,D}] | {A,C}=TRUE, {B,D}=FALSE |
| [{A, D}, {B,C}] | {A,D}=TRUE, {B,C}=FALSE |

In Table 14 above, [{X,Y},{Z,W}] means that two Tx chains are each switched from a band pair {X,Y} to {Z,W}, or two Tx chains are each switched from a band pair {Z,W} to {X,Y}.

[1-10] When UL Tx switching occurs between three bands (e.g., two Tx chains of the band A are switched to one Tx chain each of the band B and the band C) based on the UTS gap configuration according to the RRC configuration method described above ([1-9]), a value configured via RRC may be applied/configured for a specific band pair combination corresponding to a superset of the corresponding three bands. For example, if 2 Tx chains of the band A are switched to 1 Tx chain each to the band B and the band C, values configured in [{A,D},{B,C}] in Table 14 of [1-9] may be applied (i.e., apply A=TRUE, B=FALSE, C=FALSE). As another example, if 1 Tx chain from each of the band A and the band B is switched to the band D, values configured in [{A,B},{C,D}] in Table 14 of [1-9] may be applied (i.e., apply A=TRUE, B=TRUE, and D=FALSE). This method may be specifically applied to UL Tx switching between three bands. Alternatively, the method may also be applied to Tx switching between two bands (the above method is conveniently referred to as "superset band pair configuration application method").

For example, in addition to configuring a UTS gap between two bands according to the RRC configuration method of [1-1] to [1-3]/[1-3A] described above, a UTS gap between two band pairs according to the RRC configuration method of [1-9] described above may be configured. In this case, the superset band pair configuration application method may be applied during UL Tx switching between three bands.

As another example, only UTS gap configuration between two band pairs according to the RRC configuration method of [1-9] described above may be given. In this case, the superset band pair configuration application method may be applied not only to UL Tx switching between three bands, but also to UL Tx switching between two bands.

[1-11] The RRC configuration method described above (of [1-9] described above) may be determined/configured as an RRC configuration value corresponding to a combination of the corresponding three bands when UL Tx switching is performed between the three bands (e.g., two Tx chains of the band A are switched to one Tx chain each of the band B and the band C). For example, in addition to UTS gap configuration between two bands according to the RRC configuration methods of [1-1] to [1-3]/[1-3A] described above and/or UTS gap configuration between two band pairs according to the RRC configuration method of [1-9] described above, a UTS gap may be configured for combinations (e.g., 12) of three bands according to the following RRC configuration methods. For example, UTS gap application bands for each band may be configured/applied as shown in Table 15 below.

[Table 15]

| Band pair combination | Band in which UTS gap is to be applied |
|---|---|
| [{A}, {B, C}] | A=TRUE, B=FALSE, C=FALSE |
| [{A}, {B, D}] | A=TRUE, B=FALSE, D=FALSE |
| [{A}, {C, D}] | A=TRUE, C=FALSE, D=FALSE |
| ... | ... |

In the table above, [{X},{Y,Z}] means that two Tx chains connected to the band X are switched to the band Y and the band Z, one Tx chain each, or two Tx chains connected to the band Y and the band Z, one Tx chain each, are switched to the band X (simultaneously).

Alternatively, the UTS gap application band may be configured/applied by band or band pair combination unit as shown in Table 16 below.

[Table 16]

| Band pair combination | Band in which UTS gap is to be applied |
|---|---|
| [{A}, {B, C}] | A=TRUE, {B,C}=FALSE |
| [{A}, {B, D}] | A=TRUE, {B,D}=FALSE |
| [{A}, {C, D}] | A=TRUE, {C,D}=FALSE |
| ... | ... |

In the table above, [{X},{Y,Z}] means that two Tx chains connected to the band X are switched to the band Y and the band Z, one Tx chain each, or two Tx chains connected to the band Y and the band Z, one Tx chain each, are switched to the band X (simultaneously).

[1-12] The RRC configuration method described above may be determined/configured as an RRC value configured in a combination of the corresponding three bands when UL Tx switching is performed between the three bands (e.g., two Tx chains of the band A are switched to one Tx chain each of the band B and the band C). For example, the UTS gap application band may be configured/applied as shown in Table 17 below.

[Table 17]

| Band pair combination | Band in which UTS gap is to be applied |
|---|---|
| {A, B, C} | A=TRUE, B=FALSE, C=FALSE |
| {A, B, D} | A=TRUE, B=FALSE, D=FALSE |
| {A, C, D} | A=TRUE, C=FALSE, D=FALSE |
| {B, C, D} | B=TRUE, C=FALSE, D=FALSE |
| ... | ... |

This method may be specifically applied to (but is not limited to) UL Tx switching between three bands.

[1-13] The RRC configuration method described above may be determined/configured as a value configured in a combination of the corresponding four bands when UL Tx switching is performed between the four bands (e.g., two Tx chains of the band A are switched to one Tx chain each of the band C and the band D). For example, the UTS gap application band may be configured/applied as follows.

[Table 18]

| Band pair combination | Band in which UTS gap is to be applied |
|---|---|
| {A, B, C, D} | A=TRUE, B=FALSE, C=FALSE, D=FALSE |
| ... | ... |

This method may be specifically applied to (but is not limited to) UL Tx switching between four bands.

[1-14] For UL Tx switching between the two bands described above and/or UL Tx switching between the three or four bands, "UTS gap application band" or "TRUE/FALSE for UTS gap application for each band" (described in [1-1] to [1-8] above) is configured for each of a combination between the two bands (e.g., six combinations {A,B}, {A,C}, {A,D}, {B,C}, {B,D}, {C,D}) and/or a combination between pairs of two bands (e.g., three combinations [{A,B},{C,D}], [{A,C},{B,D}], [{A,D},{B,C}]) and/or a combination between three bands (e.g., twelve combinations [{A},{B,C}], [{A},{B,D}], [{A},{C,D}], [{B},{A,C}], ...). When Tx switching for the corresponding combination, the location of a band in which the UTS gap is to be applied may be determined according to the RRC configuration for each combination.

[1-15] For the proposed methods described above, a UE may report a preferred (or supportable) band (or band-pair or band combination) to which a UTS gap is to be applied when UL Tx switching occurs (for (assisting) a BS to configure the corresponding RRC).

[1-16] For all band combinations configured in the UE via RRC (or configured for UL Tx switching), one band in which a UTS gap is to be applied may be configured. Alternatively (in other words), one band may be configured from among all switch-from bands and switch-to bands of single UL Tx switching to which a UTS gap is to be applied. That is, for a combination of two bands, one band in which a UTS gap is to be located may be configured, and for a combination of three (or four) bands, one band in which a UTS gap is to be located may be configured.

For example, if three bands (referred to as A, B, and C respectively) are configured, one band in which a UTS gap is to be applied may be configured for each of {A, B}, {A, C}, {B, C}, and {A, B, C}. For example, it may be configured as shown in Table 19 below.

[Table 19]

| Band combination | Band in which UTS gap is to be applied (applied in band with TRUE) |
|---|---|
| {A, B} | A=TRUE, B=FALSE |
| {A, C} | A=TRUE, C=FALSE |
| {B, C} | B=FALSE, C=TRUE |
| {A, B, C} | A=TRUE, B=FALSE, C=FALSE |

If Tx in the band B moves to the band C due to UL Tx switching (for example, this may correspond to a case in which transmission before Tx switching is in the band B and 2 Txs are located in the band B, and UL transmission is scheduled in the band C, causing 1 or 2 Txs to switch to the band B), a UTS gap may be applied in the band C according to the location of the UTS gap configured in {B, C} of Table 19 above. As another example, if 2-port UL transmission is scheduled for the band C and 2 Txs are switched to the band C while 1 Tx is located in each of the band A and the band B, a UTS gap may be applied in the band A according to the location of the UTS gap configured in {A, B, C} of the above table.

As another example, if four bands (referred to as A, B, C, and D respectively) are configured, one band in which a UTS gap is to be applied may be configured for each of {A, B}, {A, C}, {A, D}, {B, C}, {B, D}, {C, D}, {A, B, C}, {A, B, D}, {A, C, D}, {B, C, D}, {A, B, C, D}. For example, it may be configured as shown in Table 20 below.

[Table 20]

| Band combination | Band in which UTS gap is to be applied (applied in band with TRUE) |
|---|---|
| {A, B} | A=TRUE, B=FALSE |
| {A, C} | A=FALSE, C=TRUE |
| {A, D} | A=TRUE, D=FALSE |
| {B, C} | B=FALSE, C=TRUE |
| {B, D} | B=TRUE, D=FALSE |
| {C, D} | C=FALSE, D=TRUE |

(continued)

| Band combination | Band in which UTS gap is to be applied (applied in band with TRUE) |
|---|---|
| {A, B, C} | A=TRUE, B=FALSE, C=FALSE |
| {A, B, D} | A=FALSE, B=TRUE, C=FALSE |
| {A, C, D} | A=FALSE, C=FALSE, D=TRUE |
| {B, C, D} | B= TRUE, C=FALSE, D= FALSE |
| {A, B, C, D} | A= TRUE, B= FALSE, C=FALSE, D=FALSE |

The method may be understood as a method in which a UTS gap is applied in one band (configured via RRC) equally even when UL Tx switching occurs between bands belonging to a specific band combination, when the number of switched Txs is different, and/or when the switch-from band/switch-to band is different. For example, for a band combination {A,B}, a UTS gap may be applied in one band (e.g., band A according to the above table) configured via RRC, regardless of whether one Tx in band A is switched to the band B (represented as A(1T) -> B(1T)), two Txs in the band A are switched to the band B (represented as A(2T) -> B(2T)), one Tx in the band B is switched to the band A (represented as B(1T) -> A(1T)), or two Txs in the band B are switched to the band A (represented as B(2T) -> A(2T)). As another example, for a band combination {A,B,C}, in the case of different switching cases such as "A(2T) -> B(1T)+C(1T)", "B(2T) -> A(1T)+C(1T)", "C(2T) -> A(1T)+B(1T)", "A(1T)+B(1T) -> C(2T)", "B(1T)+C(1T) -> A(2T)", and "A(1T)+C(1T) -> B(2T)", a UTS gap may be applied to all of the cases equally to one band (e.g., band A according to the above table).

The above method is not limited to three or four bands. In other words, if (specifically) a band combination includes N bands, TRUE may be configured for only one of the bands and FALSE may be configured for the remaining N-1 bands.

[1-17] When UL Tx switching occurs between bands belonging to a specific band combination, a UTS gap may be applied (commonly/identically) to all bands at a side at which a band is configured to TRUE (i.e., switch-from band(s) or switch-to band(s)) (regardless of how the switch-from/to bands are configured). For example, if the UTS gap configuration of a band combination {A, B, C} is {A,B,C}={TRUE, FALSE, FALSE}, the UTS gap application band may be determined as shown in Table 21.

[Table 21]

| UL Tx switching case | switch-from band(s) | switch-to band(s) | Band(s) to which UTS gap is applied |
|---|---|---|---|
| A(2T)-> B(1T)+C(1T) | A | B, C | A |
| B(2T)-> A(1T)+C(1T) | B | A, C | A, C |
| C(2T)-> A(1T)+B(1T) | C | A, B | A, B |
| A(1T)+B(1T)-> C(2T) | A, B | C | A, B |
| B(1T)+C(1T)-> A(2T) | B, C | A | A |
| A(1T)+C(1T)-> B(2T) | A, C | B | A, C |

This method may be applied together with the RRC configuration of [1-16] described above. For example, one band is configured to apply the UTS gap per band combination, like in [1-16]. For each switching case, a UTS gap may be applied in the entire switch-from band or the entire switch-to band to which the corresponding one band belongs.

Through a UE capability report or the like, a UE may report to a BS (by band combination) whether the UE prefers to apply this method, and the BS may configure whether to 'enable' this method (based on this report) to the UE via separate RRC (e.g., by cell group or by band combination).

[1-18] When UL Tx switching occurs between bands belonging to a specific band combination, a band in which a UTS gap is to be applied from among {band1, band2} may be configured via separate RRC for the band (=band1) with the latest UL transmission time (e.g., a first symbol or a last symbol of the corresponding UL transmission) from among the switch-from band(s) and the band (=band2) with the earliest UL transmission time (e.g., the first symbol or the last symbol of the corresponding UL transmission) from among the switch-to band(s). In this case, if the UL symbols of two switch-from (or switch-to) bands are at the same time, one of the bands may be determined as band1 or band2. This determination method may be pre-defined (e.g., determined as a highest/lowest freq.band or a band corresponding to a highest/lowest priority) or configured via RRC or the like.

For example, in a state in which a UTS gap application band is preconfigured for each band pair via RRC, for UL Tx switching of A(1T)+B(1T) -> C(1T)+D(1T), the band B is transmitted at a later time during UL transmission of the band A and the band B (before Tx switching) and UL transmission of the band D starts earlier (than UL of band C) during UL transmission of the band C and the band D (after Tx switching).

That is, a band in which the UTS gap is to be applied may be determined based on an RRC configuration value pre-configured for each Tx switching case, for a band pair including one band with the latest UL transmission from among the switch-from band(s) and one band with the fastest UL transmission from among the switch-to band(s), in a state in which one of the two bands is preconfigured as a band pair via RRC (similar to [1-1] described above).

**[2] Method of dynamically configuring band in which UTS gap is to be applied for each band pair (or band combination)**

[2-1] For each band pair in which UTS occurs (or is related to UTS), a band in which the UTS gap is to be applied may be dynamically configured/indicated through a separate DCI indication. In this case, the DCI may be used for scheduling UL transmissions for these instructions. For example, when a Tx chain is connected to a specific band A and UL transmission is scheduled to the band B via DCI (i.e., UL grant), thereby switching the Tx chain from the band A to the band B, the DCI may configure/indicate the band in which the UTS gap is to be applied from among the bands A and B. To this end, a separate field may be defined/configured in the corresponding scheduling DCI. For example, if UL Tx switching is configured to occur in four bands, a separate 2-bit field included in the scheduling DCI may indicate one band in which the UTS gap is to be applied from among the four bands. As another example, for a UE configured to have UL Tx switching in four bands (same as the above example), a separate 1-bit (or 2-bit) field included in the scheduling DCI may indicate one band in which the UTS gap is to be applied from among the switch-from band(s) and switch-to band(s) (related to the corresponding Tx switching).

[2-2] In the [2-1] method, the UTS gap application band may also be indicated through separate DCI (or a separate MAC-CE command) rather than scheduling DCI for UL transmission that triggers UL Tx switching. In this case, the number of bits (or fields) defined/used in the corresponding DCI (or MAC-CE) may follow the method described in [2-1].

[2-3] To avoid malfunction of a UE, which may occur when the UE misses an instruction through the DCI (or MAC-CE) of [2-1] and [2-2] above, a default band in which the UTS gap is to be applied may be configured. The corresponding basic band may be predefined or configured via RRC, or the like. Alternatively, a base band may be configured/determined according to the reference band determination method described in [1-7] above. If the UTS gap application band instructed by the UE (via DCI, or the like) when UL Tx switching occurs does not belong to a band combination (i.e., switch-from band(s) and switch-to band(s)) related to the UL Tx switching, a UTS gap may be applied in the base band.

**[3] Method of configuring band in which UTS gap is to be applied for each band pair (or band combination) according to pre-defined rule**

[3-1] When UL Tx switching occurs, a band in which the UTS gap is to be applied may be configured/determined as the reference band described in [1-7] above. In this case, the reference band may be determined as one of bands belonging to a band combination related to the corresponding UL Tx switching (i.e., switch-from band(s) and switch-to band(s)).

For example, if the reference band is a switch-from band, a UTS gap may be configured/applied in one or more switch-from bands including the reference band. In this case, the UTS gap may not be configured/applied in the remaining switch-to-band.

As another example, if the reference band is a switch-to band, a UTS gap may be configured/applied in one or more switch-to bands including the reference band. In this case, the UTS gap may not be configured/applied in the remaining switch-from-band.

[3-2] When UL Tx switching occurs, a band in which the UTS gap is to be applied may be configured/determined as one switch-from band from among bands belonging to a band combination (i.e., switch-from band(s) and switch-to band(s)) related to the corresponding UL Tx switching. When there are two or more switch-from bands, one of the bands may be determined as a band in which a UTS gap is to be applied by using the reference band determination method described in [1-7].

For example, the UTS gap may be configured/applied in one or more switch-from bands. The UTS gap may not be configured/applied in the remaining switch-to-band.

[3-3] When UL Tx switching occurs, a band in which the UTS gap is to be applied may be configured/determined as one switch-to band from among bands belonging to a band combination (i.e., switch-from band(s) and switch-to band(s)) related to the corresponding Tx switching. When there are two or more switch-to bands, one of the bands may be determined as a band in which a UTS gap is to be applied by using the reference band determination method described in [1-7].

For example, the UTS gap may be configured/applied in one or more switch-to bands. The UTS gap may not be configured/applied in the remaining switch-from-band.

[3-4] When UL Tx switching occurs, a band in which the UTS gap is to be applied may be configured/determined as one switch-from band or switch-to band from among bands belonging to a band combination (i.e., switch-from band(s) and switch-to band(s)) related to the corresponding UL Tx switching. In this case, whether the UTS gap is to be applied in the switch-from band or the switch-to band may be configured/determined via RRC, or the like. For example, whether or not to apply a UTS gap to a switch-from band may be configured to TRUE via RRC, or the like and whether or not to apply a UTS gap to a switch-to band may be configured to FALSE (or vice versa). When there are two or more switch-from (switch-to) bands, one of the bands may be determined as a band in which a UTS gap is to be applied by using the reference band determination method described in [1-7].

[3-5] When UL Tx switching occurs, a band in which the UTS gap is to be applied may be defined/configured as a band in which UL transmission occurs through scheduling DCI from among bands belonging to a band combination (i.e., switch-from band(s) and switch-to band(s)) related to the corresponding UL Tx switching. For example, if UL Tx switching occurs due to UL transmission via a UL grant, a UTS gap may be applied in a band corresponding to the corresponding UL transmission. That is, if PUSCH transmission is scheduled in the band A via a UL grant, and this results in UL Tx switching (e.g., Tx chain switching from the band B to the band A), a UTS gap may be applied in the band A.

[3-6] When UL Tx switching occurs, a band in which the UTS gap is applied may be defined/configured as a band other than the band in which UL transmission via scheduling DCI occurs from among bands belonging to a band combination (i.e., switch-from band(s) and switch-to band(s)) related to the corresponding UL Tx switching (i.e., if the corresponding UL transmission is the switch-from (or switch-to) band, the UTS gap is applied in the switch-to (or switch-from) band). For example, if UL Tx switching occurs due to UL transmission via a UL grant, a UTS gap may be applied in a band other than the band corresponding to the UL transmission from among the bands related to the UL Tx switching. For example, if PUSCH transmission is scheduled in the band A via a UL grant, and this results in UL Tx switching (e.g., Tx chain switching from the band B to the band A), a UTS gap may be applied in the band B. If the band in which the UTS gap is to be applied is not determined as one band during this process, one band in which the UTS gap is to be applied may be determined by the method described in [1-7] above.

[3-7] When UL Tx switching occurs, a band in which the UTS gap is to be applied may be defined/configured as a band in which UL transmission occurs via RRC from among bands belonging to a band combination (i.e., switch-from band(s) and switch-to band(s)) related to the corresponding Tx switching. For example, if UL Tx switching occurs due to UL transmission configured via RRC (e.g., periodic SRS or configured PUSCH), a UTS gap may be applied in the band corresponding to the corresponding UL transmission. For example, if UL transmission (of a configured PUSCH) is configured in the band A via RRC, and this results in UL Tx switching (e.g., Tx chain switching from the band B to the band A), a UTS gap may be applied in the band A.

[3-8] When UL Tx switching occurs, a band in which the UTS gap is applied may be defined/configured as a band other than the band in which UL transmission via RRC is configured from among bands belonging to a band combination (i.e., switch-from band(s) and switch-to band(s)) related to the corresponding Tx switching (i.e., if the corresponding UL transmission is the switch-from (or switch-to) band, the UTS gap is applied in the switch-to (or switch-from) band). For example, if UL Tx switching occurs due to UL transmission configured via RRC (e.g., periodic SRS or configured PUSCH), a UTS gap may be applied in a band other than the band corresponding to the corresponding UL transmission from among bands related to the corresponding UL Tx switching. That is, if UL transmission (of a configured PUSCH) is configured in the band A via RRC, and this results in UL Tx switching (e.g., Tx chain switching from the band B to the band A), a UTS gap may be applied in the band A. If the band in which the UTS gap is to be applied is not determined as one band during this process, one band in which the UTS gap is to be applied may be determined by the method described in [1-7] above.

[3-9] The method proposed through [3-1] to [3-8] above may be applied selectively (depending on needs of a BS). To this end, after a plurality of predefined rules are configured via RRC, a specific rule may be selected and applied through separate configuration (or indication via DCI).

[3-10] The methods for defining/configuring/determining a band in which the UTS gap is to be applied, proposed in [1]/[2]/[3] above, may be applied independently. Alternatively, a combination of two or more of the methods proposed in [1]/[2]/[3] above, for defining/configuring/determining a band in which the UTS gap is to be applied, may be applied.

The contents of the present disclosure are not limited to transmission and reception of UL and/or DL signals. For example, the contents of the present disclosure may also be used in direct communication between UEs. A BS in the present disclosure may be a concept that includes not only a BS but also a relay node. For example, an operation of the BS in the present disclosure may be performed by the BS, but may also be performed by the relay node.

It is obvious that the examples of the proposed method described above may also be included as one of the implementation methods of the present disclosure, and thus may be considered as a kind of proposed method. The proposed methods described above may be implemented independently, but may also be implemented in the form of a combination (or merge) of some proposed methods. A rule may be defined such that information on whether the proposed methods are applicable (or information on the rules of the proposed methods) is reported by the BS to the UE or by a receiving UE to a receiving UE through a predefined signal (e.g., physical layer signal or higher layer signal).

Implementation example

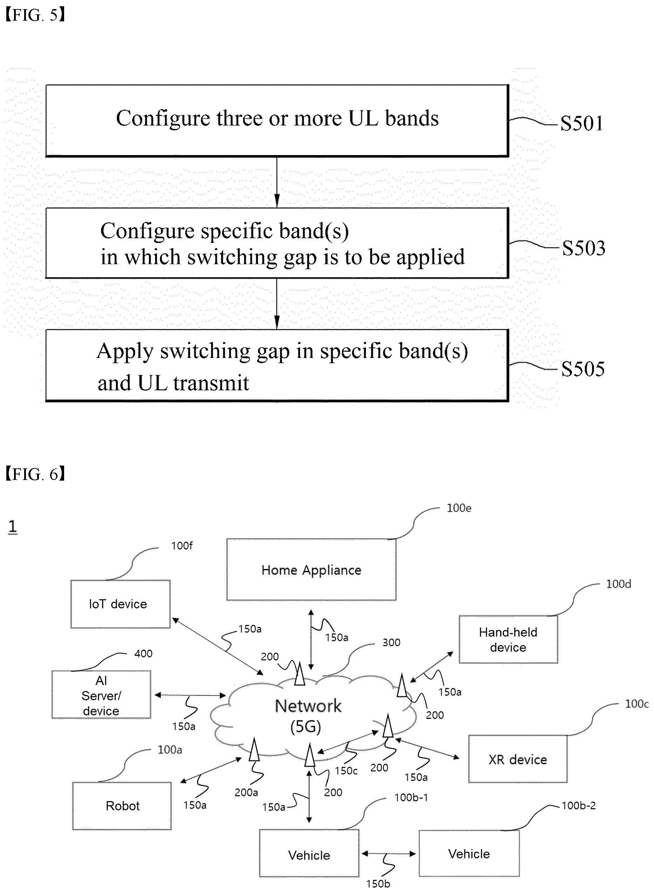

FIG. 5 is a flowchart of a signal transmission and reception method according to embodiments of the present disclosure.

Referring to FIG. 5, a signal transmission and reception method according to an embodiment of the present disclosure may be performed by a UE and may include configuring three or more (at least three) UL bands (S501), configuring specific band(s) to which a switching gap is to be applied (S503), and applying the switching gap in the specific band(s) and performing UL trans mission (S505).

The signal transmission and reception method by a BS corresponding to the embodiment of the present disclosure of FIG. 5 may include configuring three or more (at least three) UL bands to a UE (S501), configuring specific band(s) to which a switching gap is to be applied to the UE (S503), and receiving UL transmission to which the switching gap is applied in the specific band(s) (S505).

In addition to the operations of FIG. 5, one or more of the operations described through sections [1] to [3] may be performed.

For example, referring to section [1-12], for all band combinations configurable by three UL bands, one or more specific band(s) to which a switching gap is to be applied are configured for each band combination. For example, referring to Table 17, for each of all band combinations to be configured with three UL bands, one or more specific band(s) may be configured to TRUE.

Referring to section [1-13], for all band combinations configurable by four UL bands, one or more specific band(s) to which a switching gap is to be applied are configured for each band combination. For example, referring to Table 18, for each of all band combinations to be configured with three UL bands, one or more specific band(s) may be configured to a TRUE value.

Only one of the methods of [1-12] and [1-13] may be configured to the UE, but a specific method may be used based on the number of bands in which actual switching occurs when both methods are configured. Each method may be configured via single or multiple RRC signaling. When the bands related to UL switching correspond to a specific combination from among the configured band combinations, a switching gap is applied in specific UL band(s) configured for the corresponding specific combination. For example, referring to Table 17, if 1-port UL transmission needs to be performed in the bands B and C each after 2-port UL transmission is performed in the band A, a switching gap is applied in the band A with the TRUE value configured.

The UE applies a switching gap in a specific UL band and performs UL transmission, and in the band in which the switching gap is applied, UL transmission is omitted during the switching gap.

Referring to section [1-17], if the specific UL band is a switch-to band, the switching gap may be applied in all switch-to bands. If a specific UL band is a switched-from band, a switching gap may be applied in all switched-from bands. For example, referring to Table 17 and Table 21, if 2-port UL transmission is to be performed in the band C after 1-port UL transmission is performed on the bands A and B, respectively, a switching gap is applied in the bands A and B. Therefore, each 1-port UL transmission performed on the bands A and B may be omitted during the switching gap. Referring to Table 17 and Table 21, if 1-port UL transmission needs to be performed in the bands A and C after 2-port UL transmission is performed in the band B, a switching gap is applied in the bands A and C. Therefore, each 1-port UL transmission performed on the bands A and C may be omitted during the switching gap.

Referring to section [1-18], a band in which a switching gap is applied may be configured for a combination of a switch-from band with a latest UL transmission and a switch-to band with an earliest UL transmission from among UL transmissions related to UL switching in at least three UL bands. Accordingly, a specific band in which a switching gap is applied may be configured as one of a switch-from band having the latest UL transmission from among UL transmissions related to UL switching and a switch-to band having the earliest UL transmission from among UL transmissions related to UL switching. In a specific band in which a switching gap is applied, UL transmissions may be omitted during the switching gap, and thus the earliest or latest UL transmission from among the UL transmissions related to the UL switching may be omitted during the switching gap.

Alternatively, referring to section [3-1], the band in which the switching gap is to be applied may be determined as the reference band of section [1-7]. Therefore, the UE may apply the switching gap in the reference band and perform UL transmission. UL transmission in the reference band may be omitted. Here, the reference band may be configured based on section [1-7]. For example, the reference band may be a band with the lowest or highest index from among UL bands related to UL switching. Alternatively, the reference band may be a band with the lowest priority from among the UL bands related to UL switching.

In addition to the operations described with respect to FIG. 5, one or more of the operations described with reference to FIGS. 1 to 4 and/or the operations described in sections [1] to [3] may be additionally performed in combination.

<u>Example of communication system to which the present disclosure is applied</u>

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 6 illustrates a communication system 1 applied to the present disclosure.

Referring to FIG. 6, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

<u>Example of wireless device to which the present disclosure is applied</u>

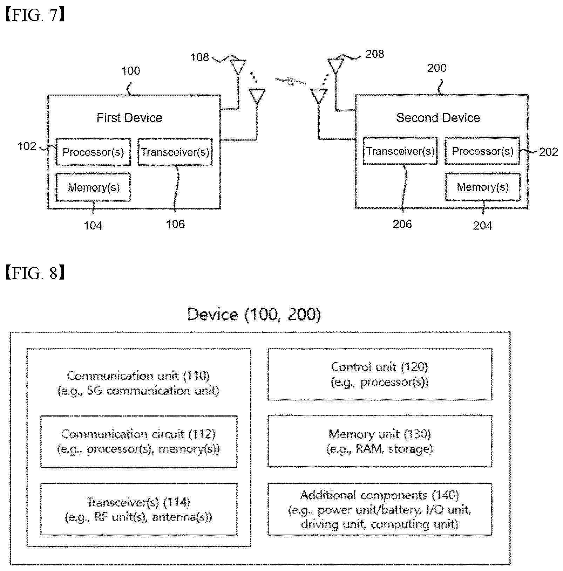

FIG. 7 illustrates wireless devices applicable to the present disclosure.

Referring to FIG. 7, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 6.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

FIG. 8 illustrates another example of a wireless device applied to the present disclosure. The wireless device may be implemented in various forms according to a use case/service (refer to FIG. 6).

Referring to FIG. 8, wireless devices 100 and 200 may correspond to the wireless devices 100 and 200 of FIG. 7 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 7. For example, the transceiver(s) 114 may include the one or more transceivers 106 and 206 and/or the one or more antennas 108 and 208 of FIG. 7. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 6), the vehicles (100b-1 and 100b-2 of FIG. 6), the XR device (100c of FIG. 6), the hand-held device (100d of FIG. 6), the home appliance (100e of FIG. 6), the IoT device (100f of FIG. 6), a digital broadcasting terminal, a hologram device, a public safety device, an MTC device, a medical device, a FinTech device (or a finance device), a security device, a climate/environment device, the AI server/device (400 of FIG. 6), the BSs (200 of FIG. 6), a network node, or the like. The wireless device may be mobile or fixed according to a use case/service.

In FIG. 8, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

Example of vehicle or autonomous driving vehicle to which the present disclosure is applied

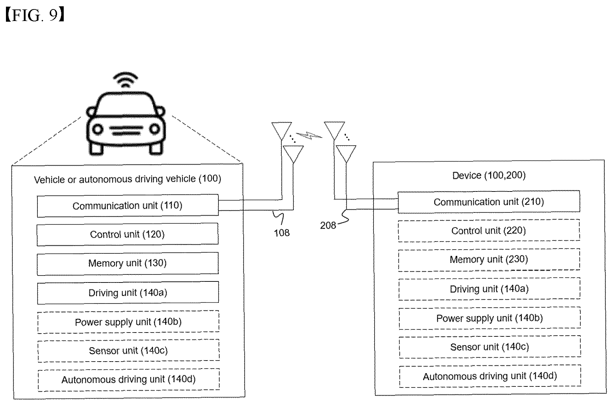

FIG. 9 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 9, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 8, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

INDUSTRIAL APPLICABILITY

As described above, the present disclosure is applicable to various wireless communication systems.

**Claims**

1.   A method of transmitting and receiving a signal by a user equipment (UE) in a wireless communication system, the method comprising:

configuring at least three uplink (UL) bands;
configuring one or more specific UL bands in which a switching gap is to be applied for each band combination, for all band combinations configurable by the at least three UL bands; and
based on bands related to UL switching corresponding to a specific band combination from among the band combinations, applying the switching gap in the one or more specific UL bands for the specific band combination and performing UL transmission,
wherein, during the switching gap, the UL transmission is omitted.

2. The method of claim 1, wherein, based on that the one or more specific UL bands are each a switch-from band, the switching gap is applied in all switch-from bands belonging to the specific band combination.

3. The method of claim 1, wherein, based on that the one or more specific UL bands are each a switch-to band, the switching gap is applied in all switch-to bands belonging to the specific band combination.

4. The method of claim 1, further comprising:

   configuring a band in which a second switching gap is to be applied, within a combination of a switch-from band having a latest second UL transmission and a switch-to band having an earliest second UL transmission, from among second UL transmissions related to second UL switching in at least three UL bands; and
   applying the second switching gap to one band of the switch-from band having the latest second UL transmission and the switch-to band having the earliest second UL transmission and performing the second UL transmissions, wherein, during the second switching gap, the second UL transmission in the one band is omitted.

5. The method of claim 1, wherein the one or more specific UL bands are configured via radio resource control (RRC) signaling.

6. The method of claim 1, further comprising:

   configuring a reference band from among at least three UL bands; and
   applying the second switching gap in the reference band and performing a second UL transmission, wherein, during the second switching gap, the second UL transmission is omitted.

7. The method of claim 6, wherein the reference band is a UL band with a lowest index from among the at least three UL bands.

8. The method of claim 6, wherein the reference band is a band with a lowest priority from among the at least three UL bands.

9. A user equipment (UE) for transmitting and receiving a signal in a wireless communication system of claim 1, the UE comprising:

   at least one transceiver;
   at least one processor; and
   at least one memory operably connected to the at least one processor and storing instructions that, when executed, cause the at least one processor to perform a specific operation,
   wherein the specific operation includes:

   configuring at least three uplink (UL) bands;
   configuring one or more specific UL bands in which a switching gap is to be applied for each band combination, for all band combinations configurable by the at least three UL bands; and
   based on bands related to UL switching corresponding to a specific band combination from among the band combinations, applying the switching gap in the one or more specific UL bands for the specific band combination and performing UL transmission, and
   wherein, during the switching gap, the UL transmission is omitted.

10. A device for a user equipment (UE), the device comprising:

   at least one processor; and
   at least one computer memory operably connected to the at least one processor and configured to, when executed, cause the at least one processor to perform an operation including:

   configuring at least three uplink (UL) bands;
   configuring one or more specific UL bands in which a switching gap is to be applied for each band combination, for all band combinations configurable by the at least three UL bands; and
   based on bands related to UL switching corresponding to a specific band combination from among the band combinations, applying the switching gap in the one or more specific UL bands for the specific band combination and performing UL transmission, and

wherein, during the switching gap, the UL transmission is omitted.

11. A computer-readable nonvolatile storage medium including at least one computer program that causes a user equipment (UE) including at least one processor to perform an operation, the operation comprising:

configuring at least three uplink (UL) bands;

configuring one or more specific UL bands in which a switching gap is to be applied for each band combination, for all band combinations configurable by the at least three UL bands; and

based on bands related to UL switching corresponding to a specific band combination from among the band combinations, applying the switching gap in the one or more specific UL bands for the specific band combination and performing UL transmission, and

wherein, during the switching gap, the UL transmission is omitted.

12. A method of transmitting and receiving a signal by a base station (BS) in a wireless communication system, the method comprising:

configuring at least three uplink (UL) bands in a user equipment (UE);

configuring one or more specific UL bands in which a switching gap is to be applied for each band combination, for all band combinations configurable by the at least three UL bands, in the UE; and

based on bands related to UL switching corresponding to a specific band combination from among the band combinations, receiving, from the UE, UL transmission, to which the switching gap is applied, in the one or more specific UL bands for the specific band combination,

wherein, during the switching gap, the UL transmission is omitted.

13. A base station (BS) for transmitting and receiving a signal in a wireless communication system, the BS comprising:

at least one transceiver;

at least one processor; and

at least one memory operably connected to the at least one processor and storing instructions that, when executed, cause the at least one processor to perform a specific operation,

wherein the specific operation includes:

configuring at least three uplink (UL) bands in a user equipment (UE);

configuring one or more specific UL bands in which a switching gap is to be applied for each band combination, for all band combinations configurable by the at least three UL bands, in the UE; and

based on bands related to UL switching corresponding to a specific band combination from among the band combinations, receiving, from the UE, UL transmission, to which the switching gap is applied, in the one or more specific UL bands for the specific band combination, and

wherein, during the switching gap, the UL transmission is omitted.

【FIG. 1】

One Frame (10ms)

Half-Frame (5ms)　　Half-Frame (5ms)

Subframe 0 (1ms)　Subframe 4 (1ms)　Subframe 5 (1ms)　Subframe 9 (1ms)

Subframe (1ms)

15KHz　Slot (14 symbols)
1ms

30KHz　Slot 0 (14 symbols)　Slot 1
500us

60KHz　Slot 0 (14 symbols)　Slot 1　Slot 2　Slot 3
250us

120KHz　Slot 0 (14 symbols)　Slot 1　Slot 2　Slot 3　Slot 4　Slot 5　Slot 6　Slot 7
125us

【FIG. 2】

【FIG. 3】

【FIG. 4】

Previous transmission    Current transmission

(a)

Previous transmission    Current transmission

(b)

【FIG. 5】

【FIG. 6】

【FIG. 7】

【FIG. 8】

Device (100, 200)

【FIG. 9】

| Vehicle or autonomous driving vehicle (100) |
| Communication unit (110) |
| Control unit (120) |
| Memory unit (130) |
| Driving unit (140a) |
| Power supply unit (140b) |
| Sensor unit (140c) |
| Autonomous driving unit (140d) |

108

208

| Device (100,200) |
| Communication unit (210) |
| Control unit (220) |
| Memory unit (230) |
| Driving unit (140a) |
| Power supply unit (140b) |
| Sensor unit (140c) |
| Autonomous driving unit (140d) |

## INTERNATIONAL SEARCH REPORT

International application No.

**PCT/KR2023/013258**

### A. CLASSIFICATION OF SUBJECT MATTER

**H04L 5/00**(2006.01)i; **H04W 72/231**(2023.01)i; **H04W 72/232**(2023.01)i; **H04L 27/00**(2006.01)i; **H04L 5/02**(2006.01)i; **H04L 25/02**(2006.01)i; **H04L 12/02**(2006.01)i; **H04W 72/04**(2009.01)i; **H04W 72/23**(2023.01)i

According to International Patent Classification (IPC) or to both national classification and IPC

### B. FIELDS SEARCHED

Minimum documentation searched (classification system followed by classification symbols)

H04L 5/00(2006.01); H04B 7/06(2006.01); H04B 7/185(2006.01); H04W 76/10(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 상향링크(uplink), 대역(bandwidth), 조합(combination), 스위칭 갭(switching gap), 생략(omit)

### C. DOCUMENTS CONSIDERED TO BE RELEVANT

| Category* | Citation of document, with indication, where appropriate, of the relevant passages | Relevant to claim No. |
|---|---|---|
| DX<br>DA | 3GPP; TSG RAN; NR; Physical layer procedures for data (Release 17). 3GPP TS 38.214 V17.2.0. 23 June 2022.<br>See page 170. | 1,5,9-13<br>2-4,6-8 |
| A | NOKIA et al. Introduction of switched uplink operation. R1-2005120, 3GPP TSG RAN WG1 Meeting #101-e, e-Meeting. 12 June 2020.<br>See pages 2-4. | 1-13 |
| A | US 2022-0006600 A1 (QUALCOMM INCORPORATED) 06 January 2022 (2022-01-06)<br>See paragraphs [0384]-[0410]; and figures 15-21. | 1-13 |
| A | KR 10-2020-0039676 A (QUALCOMM INCORPORATED) 16 April 2020 (2020-04-16)<br>See paragraphs [0079]-[0092]; and figures 11-12. | 1-13 |
| A | KR 10-2018-0061080 A (AIRPOINT et al.) 07 June 2018 (2018-06-07)<br>See paragraphs [0026]-[0055]; and figures 3-4. | 1-13 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 December 2023** | **21 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/013258**

| Patent document cited in search report | | | Publication date (day/month/year) | Patent family member(s) | | | Publication date (day/month/year) |
|---|---|---|---|---|---|---|---|
| US | 2022-0006600 | A1 | 06 January 2022 | CN | 115812288 | A | 17 March 2023 |
| | | | | EP | 4176556 | A1 | 10 May 2023 |
| | | | | KR | 10-2023-0031225 | A | 07 March 2023 |
| | | | | WO | 2022-005949 | A1 | 06 January 2022 |
| KR | 10-2020-0039676 | A | 16 April 2020 | BR | 112020002505 | A2 | 04 August 2020 |
| | | | | CN | 110999176 | A | 10 April 2020 |
| | | | | CN | 110999176 | B | 05 July 2022 |
| | | | | CN | 114915328 | A | 16 August 2022 |
| | | | | EP | 3665837 | A1 | 17 June 2020 |
| | | | | JP | 2020-530679 | A | 22 October 2020 |
| | | | | JP | 2023-015083 | A | 31 January 2023 |
| | | | | JP | 7164593 | B2 | 01 November 2022 |
| | | | | JP | 7371202 | B2 | 30 October 2023 |
| | | | | SG | 11202000149 | A | 27 February 2020 |
| | | | | TW | 201921866 | A | 01 June 2019 |
| | | | | TW | I762700 | B | 01 May 2022 |
| | | | | US | 11652522 | B2 | 16 May 2023 |
| | | | | US | 2019-0052328 | A1 | 14 February 2019 |
| | | | | WO | 2019-032888 | A1 | 14 February 2019 |
| KR | 10-2018-0061080 | A | 07 June 2018 | None | | | |

Form PCT/ISA/210 (patent family annex) (July 2022)